(19) Europäisches Patentamt
European Patent Office
Office européen des brevets

(11) Veröffentlichungsnummer: **0 227 975**
**B1**

(12) # EUROPÄISCHE PATENTSCHRIFT

(45) Veröffentlichungstag der Patentschrift: **18.10.89**

(51) Int. Cl.⁴: **C 09 D 5/44**, C 08 G 14/06, C 08 G 18/54

(21) Anmeldenummer: **86116900.1**

(22) Anmeldetag: **04.12.86**

(54) **Verfahren zur Herstellung von selbstvernetzenden KETL-Bindemitteln.**

(30) Priorität: **20.12.85 AT 3695/85**

(43) Veröffentlichungstag der Anmeldung: **08.07.87 Patentblatt 87/28**

(45) Bekanntmachung des Hinweises auf die Patenterteilung: **18.10.89 Patentblatt 89/42**

(84) Benannte Vertragsstaaten: **BE CH DE ES FR GB IT LI NL SE**

(56) Entgegenhaltungen:
**DE-A- 2 755 907**
**FR-A- 2 324 697**
**FR-A- 2 333 838**

(73) Patentinhaber: **Vianova Kunstharz Aktiengesellschaft, A-8402 Werndorf (AT)**

(72) Erfinder: **Paar, Willibald, Dr., Richard Wagnergasse 46, A-8010 Graz (AT)**

**EP 0 227 975 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von selbstvernetzenden Lackbindemitteln, welche insbesonders zur Formulierung von wasserverdünnbaren, kathodisch abscheidbaren Lacken geeignet sind (KET-Lacke).

In einer nicht zum Stand der Technik gehörenden Patentanmeldung (A 2157/85-2700) sind Epoxidharz-Phenol-Reaktionsprodukte beschrieben, für welche folgende Struktur angenommen wird:

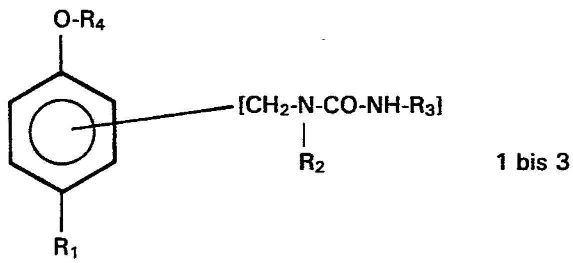

wobei

$R_1$ ein Wasserstoffatom, einen Alkyl-, Aryl- oder Aralkylrest oder einen entsprechenden Phenolrest, welcher gegebenenfalls ebenfalls 1 oder 2-[-$CH_2$-$N(R_2)$-CO-NH-$R_3$]-Reste aufweist

$R_2$ den Rest einer eine primäre Aminogruppe aufweisenden Verbindung, welche im Sinne einer Aminoalkylierung mit einem Phenol reagiert worden war, -CO-NH-$R_3$ den Rest eines in üblicher Weise halbblockierten Diisocyanates und

$R_4$ den Rest einer mit einer phenolischen Hydroxylgruppe reagierten Epoxidverbindung darstellt.

Es wurde nun gefunden, daß man die Eigenschaften dieser Bindemittel, insbesonders ihre Vernetzungsaktivität, die Löslichkeit ihrer partiellen Protonierungsprodukte, sowie den Schichtaufbau bei der elektrischen Abscheidung weiter verbessern kann, wenn man die Harze vor der Umsetzung der phenolischen Hydroxylgruppen mit Formaldehyd umsetzt. Es hat sich dabei gezeigt, daß diese Zwischenprodukte nicht nur an den reaktiven Stellen des Phenolkörpers, sondern auch an der durch die Umsetzung mit dem halbblockierten Diisocyanat entstandenen Harnstoffgruppierung Formaldehyd anlagern.

Die vorliegende Erfindung betrifft demgemäß ein Verfahren zur Herstellung von wasserverdünnbaren selbstvernetzenden Lackbindemitteln auf Basis von Epoxidharz-Phenol-Reaktionsprodukten, welches dadurch gekennzeichnet ist, daß man Umsetzungsprodukte von halbblockierten Diisocyanaten und mindestens eine NH-Gruppe aufweisenden Aminoalkylierungsprodukten von Phenolen bei 50 bis 90°C mit Formaldehyd und anschließend mit Monoepoxidverbindungen und/oder mit gegebenenfalls durch Mono- oder Polycarboxylverbindungen teilweise defunktionalisierten Di- und/oder Polyepoxidverbindungen umsetzt, wobei die maximal eingesetzte Menge an Formaldehyd der Zahl der formaldehydreaktiven Stellen des Phenols bzw. der Harnstoffgruppierungen entspricht, maximal eine der Summe der phenolischen Hydroxylgruppen und der durch die Formaldehydreaktion entstandenen Mthylolgruppen äquivalente Menge an Epoxidgruppen zum Einsatz kommt und der Anteil an basischen Gruppierungen, vorzugsweise tertiären Aminogruppen einer Aminzahl von mindestens 30 mg KOH/g entspricht.

Die Erfindung betrifft darüber hinaus auch die nach diesem Verfahren hergestellten Produkte sowie die Verwendung der Bindemittel in Lacken, vorzugsweise von Lacken für die kathodische Abscheidung.

Die Herstellung der für das erfindungsgemäße Verfahren geeigeten Aminoalkylierungsprodukte von Phenolen erfolgt nach den üblichen literaturbekannten Methoden [HOUBEN-WEYL, Methoden der organischen Chemie, Band XI/1 (1957)].

Als Phenole werden dabei Phenol oder substituierte Phenole, wie Monoalkylphenole, vorzugsweise solche, deren Alkylrest mindestens 4 C-Atome aufweist, eingesetzt. Vertreter dieser Gruppe sind die o- bzw. p-Butylphenole und ihre höheren Homologen. Ebenso können auch Arylphenole, wie Phenylphenol oder Aralkylphenole, wie Bisphenol A eingesetzt werden.

Die Phenole werden mit äquimolaren Mengen eines primären Monoalkylamins, wie Butylamin oder seine Isomeren und Homologen und/oder eines primären Alkanolamins wie Monoethanolamin oder dessen Homologe und/oder eines primär-tertiären Alkyldiamins, z.B. einem Dialkylaminoalkylamin, wie Dimethylaminoethylamin oder Diethylaminopropylamin und äquimolaren Mengen Formaldehyd umgesetzt.

In der bevorzugten Ausführungsform erfolgt die Aminoalkylierung in der Weise, daß man die Komponenten in Gegenwart eines mit Wasser ein Azeotrop bildenden Lösemittels, wie Toluol oder einem entsprechenden Benzinkohlenwasserstoff, unter Berücksichtigung einer eventuellen Exothermie auf die für die azeotrope Entfernung des Reaktionswassers notwendige Temperatur erwärmt.

Nach Abtrennung der berechneten Wassermenge wird das Kreislaufmittel unter Vakuum entfernt und das Reaktionsprodukt in einem aprotischen Lösemittel gelöst.

Das so erhaltene Reaktionsprodukt, welches pro Molekül durchschnittlich mindestens eine sekundäre Aminogruppe aufweist, wird in der nächsten Stufe bei 30 bis 50°C mit einem halbblockierten Diisocyanat umgesetzt, wobei für jede NH-Gruppe 1 Mol der Isocyanatverbindung zum Einsatz kommt. Durch die Umsetzung der NH-Gruppen mit den halbblockierten Diisocyanaten werden die erwünschten Harnstoffgruppierungen gebildet. Gegebenenfalls vorhandene Hydroxylgruppen werden dabei aufgrund der bevorzugten Reaktion zwischen NH- und NCO-Gruppen nur in vernachlässigbarem Umfang in die Reaktion einbezogen.

Für die Produkte kann im wesentlichen folgende Struktur angenommen werden.

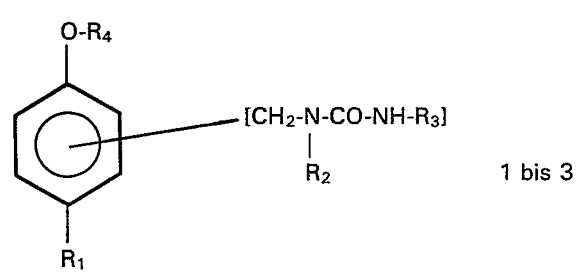

wobei

$R_1$ ein Wasserstoffatom, einen Alkyl-, Aryl- oder Aralkylrest oder einen entsprechenden Phenolrest, welcher gegebenenfalls ebenfalls 1 oder 2-[-$CH_2$-N($R_2$)-CO-NH-$R_3$]-Reste aufweist

$R_2$ den Rest einer eine primäre Aminogruppe aufweisenden Verbindung, welche im Sinne einer Aminoalkylierung mit einem Phenol reagiert worden war, -CO-NH-$R_3$ den Rest eines in üblicher Weise halbblockierten Diisocyanates und

$R_4$ den Rest einer mit einer phenolischen Hydroxylgruppe reagierten Epoxidverbindung darstellt.

Die halbblockierten Diisocyanate werden in bekannter Weise hergestellt, wobei vorzugsweise solche Diisocyanate, deren NCO-Gruppen verschiedene Reaktivität aufweisen, wie Toluylendiisocyanat oder Isophorondiisocyanat, verwendet werden.

Als Blockierungsmittel dienen bevorzugt aliphatische Monoalkohole, welche — gegebenenfalls in Gegenwart der üblichen Katalysatoren — unter den Einbrennbedingungen abgespalten werden. Andere Blockierungsmittel sind beispielsweise Phenole, Oxime, Amine, ungesättigte Alkohole, Caprolactam, etc.

Gegebenenfalls kann die Aminoalkylierung auch mit di-primären Aminen erfolgen. Als diprimäre Amine werden neben den Alkylendiaminen, also dem Ethylendiamin und seinen Homologen auch Diamine eingesetzt, welche eine durch Ethergruppen oder Aminogruppen unterbrochene Kohlenstoffkette aufweisen. Beispiele für brauchbare Verbindungen dieser Art sind das 4,7-Dioxadecan-1,10-diamin, das 7-Methyl-4,10-dioxatri-decan-1,13-diamin oder Polyoxyalkylendiamine der Formel

$$H_2N\text{-}(CH_2\text{-}\underset{\displaystyle |}{\overset{R}{C}}H\text{-}O)_n\text{-}\overset{R}{\underset{\displaystyle |}{C}}H\text{-}CH_2\text{-}NH_2$$

wobei R = H oder $CH_3$ und n = 1-30 sein kann.

Gegebenenfalls können auch Amine vom Typ des Diethylen- oder Dipropylentriamins bzw. des Polyoxypropylentriamins oder N,N'-Bis-(3-amino-propyl)-ethylendiamins eingesetzt werden.

Bei Verwendung höherfunktioneller Amine ist naturgemäß im weiteren Verlauf der Umsetzungen die Auswahl der Komponenten und der Reaktionsbedingungen besonders sorgfältig zu wählen, um eine Gelierung des Ansatzes zu vermeiden. Insbesondere ist bei Verwendung von höherfunktionellen Aminen die Menge des halbblockierten Diisocyanates in der Stufe (2) auf die Zahl der NH-Funktionen abzustimmen.

Die so erhaltenen Produkte weisen sowohl an den phenolischen Strukturelementen, wie auch an den Harnstoffgruppierungen aktive Wasserstoffatome auf, welche mit Formaldehyd unter Ausbildung von Methylolgruppen reagieren.

Beim erfindungsgemäßen Verfahren werden 20 bis 100% dieser Wasserstoffatome mit Formaldehyd umgesetzt. Dazu werden die Vorprodukte, gegebenenfalls in Gegenwart geeigneter Lösemittel, wie Diethylenglykoldialkylether Ethylenglykolmonoalkylether oder Alkoxypropanole bei 65 bis 80°C reagiert, wobei der Formaldehyd vorteilhafterweise als Paraformaldehyd zum Einsatz gelangt. Die Reaktion wird so lange fortgeführt, bis der Gehalt an freiem Formaldehyd einen konstanten Wert erreicht hat.

In der letzten Stufe werden die Reaktionsprodukte mit Epoxidverbindungen unter Bildung von Phenolethern umgesetzt. Als Epoxidverbindungen werden dabei vorzugsweise Diepoxidharze auf Basis von Bisphenol A oder Polypropylenglykol verwendet. Anteilsweise können auch Monoepoxidverbindungen wie Glycidylester von Monocarbonsäuren, insbesonders solche der sogenannten KOCH-Säuren sowie 2-Ethylhexylglycidylether verwendet werden. Die Umsetzung erfolgt bei 90 bis 130°C bis zu einem Epoxidwert von praktisch 0.

Gegebenenfalls können die eingesetzten Di- oder Polyepoxidharze vor der Umsetzung durch Reaktion mit Mono- oder Polycarboxylverbindungen teilweise defunktionalisiert oder verlängert werden.

Als Monocarboxylverbindungen können die natürlichen und synthetischen Fettsäuren oder Halbester von Dicarbonsäuren mit aliphatischen Monoalkoholen oder Hydroxyalkyloxazolidinen eingesetzt werden.

Als Polycarboxylverbindungen werden bevorzugt längerkettige Dicarbonsäuren, wie dimere Fettsäuren oder Carboxylgruppen tragende, weitgehend lineare Polyester verwendet. Eine weitere Gruppe von Polycarboxylverbindungen sind Addukte von Maleinsäureanhydrid an längerkettige Polyenverbindungen, z.B. Butadienpolymere, wobei die Anhydridgruppen durch Umsetzung mit Monoalkoholen geöffnet werden.

Die Umsetzung der Carboxylverbindung mit dem Diepoxidharz kann vor der Umsetzung mit dem in Stufe (2) erhaltenen Zwischenprodukt erfolgen, wobei die Reaktion bei 100 bis 120°C, gegebenenfalls in Gegenwart von basischen Katalysatoren, bis zu einer Säurezahl von weniger als 3 mg KOH/g geführt wird.

Die Umsetzung mit der Carboxylverbindung kann aber auch gleichzeitig mit der letzten Verfahrensstufe erfolgen. Das Vorprodukt gemäß Stufe (2), die Carboxylverbindung und das Diepoxidharz werden dabei bei 90 bis 120°C bis zu einem Epoxidwert von praktisch 0 reagiert.

Bei der Formulierung der Ansätze ist darauf zu achten, daß die Endprodukte die erforderliche Basizität aufweisen, um eine ausreichende Stabilität der wäßrigen Lösung des Bindemittels zu gewährleisten. Die Einführung dieser vorzugsweise auf tertiären Aminogruppen beruhenden Basizität, entsprechend einer Aminzahl von mindestens 30 mg KOH/g, kann einerseits durch Verwendung von primär-tertiären Diaminen bei der Aminoalkylierung oder andererseits durch Einsatz von entsprechenden Aminen als Blockierungsmittel für die Halbblockierung der Diisocyanate erfolgen.

Zur Erzielung der Wasserdünnbarkeit werden die basischen Gruppen des Reaktionsproduktes mit Säuren, vorzugsweise mit Ameisensäure, Essigsäure oder Milchsäure partiell oder vollständig neutralisiert. Für eine praxisgerechte Verdünnbarkeit genügt dafür üblicherweise eine Neutralisation von 20-60% der basischen Gruppen oder eine Menge von ca. 20 bis 60 Millimol Säure pro 100 g Festharz. Die Bindemittel werden dann mit deionisiertem Wasser auf die

gewünschte Konzentration verdünnt; gegebenenfalls werden sie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verabeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170 Grad C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden. Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, soferne nicht anderes angegeben ist, auf Gewichtseinheiten.

*Beispiel 1*

In einem geeigneten Reaktionsgefäß, werden 228 Teile Bisphenol A (1 Mol) mit 260 Teilen Diethylaminopropylamin (2 Mol) und 66 Teilen Paraformaldehyd, 91% (2 Mol) in Gegenwart von 131 Teilen Toluol als Azeotropschleppmittel bis zur Abtrennung von 42 Teilen Reaktionswasser umgesetzt. Nach Kühlen auf 30°C werden innerhalb 45 Minuten 608 Teile (2,0 Mol) eines mit 2-Ethylhexanol halbblockierten Toluylendiisocyanats zugegeben. Sobald ein NCO-Wert von praktisch 0 erreicht ist, wird das Produkt in 152 Teilen Diethylenglykoldimethylether gelöst.

1400 Teile dieser Lösung werden bei 70 bis 75°C mit 132 Teilen Paraformaldehyd 91%ig (4,0 Mol) so lange umgesetzt bis der Wert für den Gehalt an freiem Formaldehyd praktisch konstant bleibt. Der Ansatz wird dann mit 190 Teilen eines Epoxidharzes auf Basis von Bisphenol A (Epoxidäquivalentgewicht ca. 190), 186 Teilen 2-Ethylhexylglycidylether und 300 Teilen Methoxypropanol versetzt und bei 90°C reagiert bis der Epoxidwert auf 0 gefallen ist. Das Produkt wird mit Methoxypropanol auf einen Festkörpergehalt von 65% verdünnt. Nach Zugabe von 0,6% (bezogen auf Metall) Dibutylzinndilaurat und 20 mMol Ameisensäure pro 100 g Festharz wird ein 15%iger wäßriger Klarlack hergestellt. Dieser ergibt, kathodisch abgeschieden und bei 170°C 20 Minuten eingebrannt, einen harten, gegenüber 200 Doppelhüben mit Methylethylketon beständigen Film.

*Beispiel 2*

1400 Teile der gemäß Beispiel 1, 1. Absatz erhaltenen Lösung werden mit 116 Teilen Paraformaldehyd, 91% (3,5 Mol) 4 Stunden bei 70 bis 75°C reagiert. Anschließend werden dem Ansatz 1100 Teile einer 70%igen Lösung eines Epoxidharzes (Basis Bisphenol A, Epoxidäquivalentgewicht ca. 480) in Methoxypropanol, 550 Teile (2,2 Mol) eines Glycidylesters einer $C_9$-$C_{11}$-tert. Monocarbonsäure und 116 Teile (0,2 Mol) einer dimeren Fettsäure (Säurezahl 186-194 mg KOH/g; Viskosität 3900 mPa.s/ 25°C; Dimergehalt mind. 75%; Trimergehalt mind. 20%) zugegeben und die Reaktion bei 90 bis 95°C weitergeführt, bis alle Epoxidgruppen verbraucht sind. Das Reaktionsprodukt wird mit Methoxypropanol auf einen Festkörpergehalt von 60% verdünnt.

Nach Zugabe von 20 mMol Ameisensäure pro 100 g Festharz und 0,6% (bezogen auf Metall) Dibutylzinndilaurat wird das Harz mit deionisiertem Wasser versetzt bis ein Festkörpergehalt von 15% erreicht ist.

Aus diesem Klarlack werden zinkphosphatierte Stahlbleche katodisch beschichtet und die abgeschiedenen Filme 20 Minuten bei 160°C eingebrannt. Es resultieren harte Filme, welche eine Methylethylketonfestigkeit von mindestens 150 Doppelhüben aufweisen.

**Patentansprüche**

1. Verfahren zur Herstellung von wasserverdünnbaren selbstvernetzenden Lackbindemitteln auf der Basis von Epoxidharz-Phenol-Reaktionsprodukten, dadurch gekennzeichnet, daß man Umsetzungsprodukte von halbblockierten Diisocyanaten und mindestens eine NH-Gruppe aufweisenden Aminoalkylierungsprodukten von Phenolen bei 50 bis 90°C mit Formaldehyd und anschließend mit Monoepoxidverbindungen und/oder mit gegebenenfalls durch Mono- oder Polycarboxylverbindungen teilweise defunktionalisierten Di- und/oder Polyepoxidverbindungen umsetzt, wobei die maximal eingesetzte Menge an Formaldehyd der Zahl der formaldehydreaktiven Stellen des Phenols bzw. der Harnstoffgruppierungen entspricht, maximal eine der Summe der phenolischen Hydroxylgruppen und der durch die Formaldehydreaktion entstandenen Methylolgruppen äquivalente Menge an Epoxydgruppen zum Einsatz kommt und der Anteil an basischen Gruppierungen, vorzugsweise tertiären Aminogruppen einer Aminzahl von mindestens 30 mg KOH/g entspricht.

2. Verfahren nach Anspruch 1, dadurch gekennzeichnet, daß 20 bis 100% der im modifizierten Aminoalkylierungsprodukt vorhandenen aktiven Wasserstoffatome mit Formaldehyd, vorzugsweise einem Paraformaldehyd, umgesetzt werden.

3. Verfahren nach den Ansprüchen 1 bis 2, dadurch gekennzeichnet, daß die Reaktion des modifizierten Aminoalkylierungsproduktes in Gegenwart von Lösemitteln, vorzugsweise von Glykolethern bei 65 bis 80°C erfolgt.

4. Verfahren nach den Ansprüchen 1 bis 3, dadurch gekennzeichnet, daß die Umsetzung mit den Epoxidverbindungen bei 90 bis 130°C bis zu einem Epoxidwert von praktisch 0 erfolgt.

5. Verfahren nach den Ansprüchen 1 bis 4, dadurch gekennzeichnet, daß die Epoxidharze vor oder während der Umsetzung mit dem Phenolkörper mit Mono- und/oder Dicarboxylverbindungen modifiziert werden.

6. Verfahren nach den Ansprüchen 1 bis 5, dadurch gekennzeichnet, daß man die basischen Gruppen durch den Einsatz von Diaminen, vorzugsweise von primär-tertiär Diaminen, bei der Aminoalkylierung und/oder durch den Einsatz von Alkanolaminen als Blockierungsmittel für die Isocyanatverbindung in das Bindemittel einführt.

7. Kathodisch abscheidbare Lackbindemittel hergestellt nach den Ansprüchen 1 bis 6.

8. Verwendung der gemäß den Ansprüchen 1 bis 7 hergestellten Bindemittel zür Formulierung von kathodisch abscheidbaren Elektrotauchlacken.

**Claims**

1. Process for preparing water-dilutable self-crosslinking paint binders based on epoxy resin/phenol reaction products, characterised in that reaction products of half-blocked diisocyanates and aminoalkylation products of phenols containing at least one NH group are reacted at 50 to 90°C with formaldehyde and subsequently with monoepoxide compounds and/or with di- and/or polyepoxide compounds which are optionally partially defunctionalised with mono- or polycarboxyl compounds, the maximum quantity of formaldehyde used corresponding to the number of formaldehyde-reactive sites in the phenol or urea groupings, at most a quantity of epoxide groups equivalent to the sum of the phenolic hydroxyl groups and the methylol groups formed by the formaldehyde reaction is used and the proportion of basic groups, preferably tertiary amino groups, corresponds to an amine number of at least 30 mg KOH/g.

2. Process according to claim 1, characterised in that 20 to 100% of the active hydrogen atoms present in the modified aminoalkylation product are reacted with formaldehyde, preferably a paraformaldehyde.

3. Process according to claims 1 to 2, characterised in that the reaction of the modified aminoalkylation product is carried out in the presence of solvents, preferably glycolethers at 65 to 80°C.

4. Process according to claims 1 to 3, characterised in that the reaction with the epoxide compounds is carried out at 90 to 130°C until an epoxide value of virtually 0 is obtained.

5. Process according to claims 1 to 4, characterised in that the epoxy resins are modified before or during the reaction with the phenolic compound with mono and/or dicarboxyl compounds.

6. Process according to claims 1 to 5, characterised in that the basic groups are introduced into the binder by the use of diamines, preferably primary/tertiary diamines, during the aminoalkylation and/or by the use of alkanolamines as blocking agents for the isocyanate compound.

7. Cathodically depositable paint binders prepared according to claims 1 to 6.

8. Use of the binders prepared according to claims 1 to 7 for the preparation of cathodically depositable electrodeposition paints.

**Revendications**

1. Procédé pour la préparation de liants pour peintures, diluables dans l'eau, autoréticulants, à base des produits de réaction de résine époxyde et de phénol, caractérisé en ce que l'on fait réagir des produits de réaction de diisocyanates semi-bloqués et des produits d'aminoalcoylation de phénols présentant au moins un groupe NH à une température de 50 jusqu'à 90°C avec du formalédhyde et consécutivement avec des composés monoépoxydés et/ou avec des composés di-/ou polyépoxydés éventuellement partiellement défonctionnalisés par des composés mono-ou polycarboxyliques, la quantité maximale de formaldéhyde mise en œuvre correspondant au nombre de positions du phénol qui réagissent avec le formaldéhyde ou des groupements d'urée, au maximum on met en œuvre une quantité de groupes époxyde par rapport équivalent à la somme des groupes hydroxyle phénoliques et des groupes méthylol produits par la réaction du formaldéhyde et la proportion de groupements basiques, de préférence de groupes d'amines tertiaires, correspond à un indice d'amine d'au moins 30 mg KOH/g.

2. Procédé selon la revendication 1, caractérisé en ce que 20 à 100% des atomes d'hydrogène actifs présents dans le produit d'aminoalcoylation modifié sont mis en réaction avec le formaldéhyde, de préférence avec un paraformaldéhyde.

3. Procédé selon les revendications 1 à 2, caractérisé en ce que la réaction du produit d'aminoalcoylation modifié s'effectue en présence de solvants, de préférence d'éthers de glycol à une température de 65 à 80°C.

4. Procédé selon les revendications 1 à 3, caractérisé en ce que la réaction avec les composés époxydés s'effectue à une température de 90 à 130°C jusqu'à une valeur d'époxyde pratiquement égale à 0.

5. Procédé selon les revendications 1 à 4, caractérisé en ce que les résines époxydes sont modifiées avant ou pendant la réaction avec le corps phénolique à l'aide de composés mono-et/ou dicarboxyliques.

6. Procédé selon les revendications 1 à 5, caractérisé en ce que l'on introduit dans le liant les groupes basiques par la mise en œuvre de diamines, de préférence de diamines primaires-tertiaires, lors de l'aminoalcoylation et/ou par la mise en œuvre d'alcanol amines en tant qu'agents bloquants pour le composé isocyanate.

7. Liants de peinture déposables à la cathode fabriqués selon les revendications 1 à 6.

8. Utilisation des liants produits selon les revendications 1 à 7 pour la formulation de peintures électrophorétiques déposables à la cathode.